# EUROPEAN PATENT SPECIFICATION

(11) **EP 4 360 922 B1**
(45) Date of publication and mention of the grant of the patent: **21.05.2025**
(21) Application number: 22862677.6
(22) Date of filing: 27.04.2022
(51) Int. Cl.: B60H 1/00, F28D 7/16

(54) **INTEGRATED CHANNEL APPARATUS FOR NON-HEAT PUMP THERMAL MANAGEMENT INTEGRATED MODULE, AND ELECTRIC VEHICLE**
INTEGRIERTE KANALVORRICHTUNG FÜR INTEGRIERTES MODUL MIT WÄRMEPUMPENWÄRMEVERWALTUNG UND ELEKTROFAHRZEUG
APPAREIL À CANAUX INTÉGRÉS POUR MODULE INTÉGRÉ DE GESTION DE CHALEUR DE POMPE AUTRE QU'UNE POMPE À CHALEUR, ET VÉHICULE ÉLECTRIQUE

(30) Priority: 06.09.2021 CN 202111037448
(43) Date of publication of application: 01.05.2024
(73) Proprietor: Zhejiang Geely Holding Group Co., Ltd., Hangzhou, Zhejiang 310051 (CN); Ningbo Geely Automobile Research & Development Co. Ltd., Hangzhou Bay New District Ningbo 315336 (CN)
(72) Inventor: LI, Guibin, Hangzhou Bay New District Ningbo, Zhejiang 315336 (CN); LIN, Bingrong, Hangzhou Bay New District Ningbo, Zhejiang 315336 (CN); XU, Junbo, Hangzhou Bay New District Ningbo, Zhejiang 315336 (CN); DAI, Haijiang, Hangzhou Bay New District Ningbo, Zhejiang 315336 (CN); XUE, Qiang, Hangzhou Bay New District Ningbo, Zhejiang 315336 (CN); ZHANG, Junzhe, Hangzhou Bay New District Ningbo, Zhejiang 315336 (CN); CHEN, Liang, Hangzhou Bay New District Ningbo, Zhejiang 315336 (CN)
(74) Representative: Barker Brettell LLP
(86) International application number: PCT/CN2022/089657
(87) International publication number: WO 2023/029533

(56) References cited:
- CN-A- 1 746 351
- CN-A- 105 190 214
- CN-A- 112 432 522
- CN-A- 112 432 522
- CN-A- 113 715 577
- CN-U- 202 548 048
- CN-U- 210 197 607
- US-A- 5 214 564
- US-A1- 2008 180 884

## Description

### TECHNICAL FIELD

The present invention relates to a technical field of an electric vehicle, in particular to an integrated channel apparatus for a non-heat pump thermal management integrated module and an electric vehicle.

### BACKGROUND

A pure electric vehicle is a vehicle driven by an electric motor, and the thermal management system of the pure electric vehicle is divided into a heat pump system and a non-heat pump system. CN112432522A describes a state of the art heat pump module.

In a prior art, the vehicle with the heat pump system and the vehicle with the non-heat pump system need to be designed separately due to their different components, this means that the designer and manufacturer of the electric vehicle need to design the electric vehicle with the heat pump platform and the electric vehicle with the non-heat pump platform separately, especially, for the heat pump thermal management module and the non-heat pump thermal management module. Although the vast majority of parts have now been integrated into the thermal management module, for the pipeline interface used to control the refrigerant circulation, a device that can quickly switch between the heat pump system and the non-heat pump system has not yet been designed due to the characteristics of the thermal management in the heat pump system and the non-heat pump system. For example, when it is needed to upgrade the electric vehicle with the non-heat pump system to the electric vehicle with the heat pump system, existing electric vehicle manufacturers and designers do not have mature solutions. In order to achieve platform universality, some manufacturers can only use the same pipeline interface as the heat pump system, which not only increases the cost of the entire vehicle, but also increases its weight, resulting in a decrease in the cruising ability of the entire vehicle.

Therefore, it is necessary to design a device to quickly upgrade the electric vehicle from the non-heat pump system to the heat pump system without significantly increasing the cost and weight of the entire vehicle.

### SUMMARY

An integrated channel apparatus for a non-heat pump thermal management integrated module provided by the present invention includes a first component and a second component. the first component is provided with a channel group and a groove; the channel group includes multiple channels, the channel is used to accommodate a connecting tube, each channel runs through the first component along a thickness direction of the first component, and the groove is provided on one side of the first component for accommodating the connecting tube; the second component is provided with a strip groove group; the strip groove group includes multiple strip grooves, each strip groove is provided corresponding to two channels in the multiple channels and is used to connect the two channels, and the channels corresponding to each strip groove are different; a flank of the first component away from the groove is hermetically connected to a mating surface of the second component.

The technical effect of the integrated channel apparatus provided by the present invention is that: during use, the integrated channel apparatus is installed in the non-heat pump thermal management integrated module, the connecting tubes that need to be connected are placed in the two channels and the strip groove correspondingly connecting the two channels, the connecting tubes that do not need to be connected are placed in the grooves; when needing to be upgraded and retrofitted to a heat pump management system, the integrated channel apparatus is disassembled, a three-way valve or a four-way valve is adaptively installed on the exposed connecting tubes according to the user's requirement to form a nine-way valve required for the heat pump management system, and then other heat pump components are additionally installed; by adjusting the nine-way valve adaptively, different connection modes between various connecting tubes can be achieved, thereby achieving the corresponding mode requirements of the heat pump management system. The integrated channel apparatus provided in the present disclosure can quickly upgrade the electric vehicle from the non-heat pump system to the heat pump system without significantly increasing the cost and weight of the entire vehicle.

An electric vehicle provided by the present invention includes a vehicle body, a thermal integration management module, and the above integrated channel apparatus for a non-heat pump thermal management integrated module, the thermal integration management module is installed on the vehicle body, and the integrated channel apparatus is installed on the thermal integration management module.

The technical effect of the electric vehicle provided by the present invention is that: as including the above integrated channel apparatus, the electric vehicle also has the technical effect that quickly upgrading the electric vehicle from the non-heat pump system to the heat pump system without significantly increasing the cost and weight of the entire vehicle.

### BRIEF DESCRIPTION OF DRAWINGS

By referring to the following detailed description of the accompanying drawings, the above and other purposes, features, and advantages of the embodiments of the present invention will become easier to understand. In the accompanying drawings, multiple embodiments of the present invention will be explained in an exemplary and non-limiting manner, where:
FIG. 1 is an overall structural schematic diagram of an integrated channel apparatus provided by an embodiment of the present disclosure;
FIG. 2 is an overall structural schematic diagram of a second component and connecting tubes of an integrated channel apparatus provided by an embodiment of the present disclosure;
FIG. 3 is a structural schematic diagram of a first component of an integrated channel apparatus under a first perspective provided by an embodiment of the present disclosure;
FIG. 4 is a structural schematic diagram of a first component of an integrated channel apparatus under a second perspective provided by an embodiment of the present disclosure;
FIG. 5 is a structural schematic diagram of a second component of an integrated channel apparatus provided by an embodiment of the present disclosure;
FIG. 6 is a structural schematic diagram of a sealing ring of an integrated channel apparatus provided by an embodiment of the present disclosure;
FIG. 7 is a principle diagram of retrofitting as a heat pump management integration module provided by an embodiment of the present disclosure;
FIG. 8 is a principle diagram of a non-heat pump management integration module installed with an integration apparatus provided by an embodiment of the present disclosure.

Reference numbers:
11-first component; 111- first channel;
112-second channel; 113-third channel;
114-fourth channel; 115-fifth channel;
116-sixth channel; 117-seventh channel;
118-eighth channel; 119-groove;
12-second component; 121 first strip groove;
122-second strip groove; 123-third strip groove;
124-fourth strip groove;
13-sealing ring;
141-first connecting tube; 142-second connecting tube;
143-third connecting tube; 144-fourth connecting tube;
151-radiator water outlet connection port; 152-radiator water inlet connection port;
153-motor water pump; 154-water-cooled condenser;
155-cooling water container; 156-two-way proportional valve;
161-first water temperature sensor; 162-second water temperature sensor;
163-third water temperature sensor; 164-fourth water temperature sensor;
171-battery pack water outlet connection port; 172-heating element water inlet connection port;
173-heating element water outlet connection port; 174-heat exchanger;
175-motor water pump; 176-battery pack water inlet connection port;
177-built-in cooling condenser inlet connection port;
178-built-in cooling condenser outlet connection port; 179-drying bottle;
181-electronic expansion valve;
182-compressor inlet connection port; 183-compressor outlet connection port;
184-build-in evaporator inlet connection port;
191-first four-way valve; 192-second four-way valve;
193-three-way valve.

### DESCRIPTION OF EMBODIMENTS

In a prior art, the vehicle with the heat pump system and the vehicle with the non-heat pump system need to be designed separately due to their different components, this means that the designer and manufacturer of the electric vehicle need to design the electric vehicle with the heat pump platform and the electric vehicle with the non-heat pump platform separately, especially, for the heat pump thermal management module and the non-heat pump thermal management module. Although the vast majority of parts have now been integrated into the thermal management module, for the pipeline interface used to control the refrigerant circulation, a device that can quickly switch between the heat pump system and the non-heat pump system has not yet been designed due to the characteristics of the thermal management in the heat pump system and the non-heat pump system. For example, when it is needed to upgrade the electric vehicle with the non-heat pump system to the electric vehicle with the heat pump system, existing electric vehicle manufacturers and designers do not have mature solutions. In order to achieve platform universality, some manufacturers can only use the same pipeline interface as the heat pump system, which not only increases the cost of the entire vehicle, but also increases its weight, resulting in a decrease in the cruising ability of the entire vehicle.

Therefore, it is necessary to design a device to quickly upgrade the electric vehicle from the non-heat pump system to the heat pump system without significantly increasing the cost and weight of the entire vehicle.

In view of this, an integrated channel apparatus for a non-heat pump thermal management integrated module provided by an embodiment of the present application includes a first component and a second component, which form a two-by-two connecting channels for placing connecting tubes, when upgrading and retrofitting to a heat pump management system, the integrated channel apparatus is disassembled, a three-way valve or a four-way valve is adaptively installed on the exposed connecting tubes, and then other heat pump components are additionally installed, the three-way valve or the four-way valve is adaptively adjusted, different connection modes between various connecting tubes can be achieved, thereby achieving the corresponding mode requirements of the heat pump management system.

In particular, an integrated channel apparatus for a non-heat pump thermal management integrated module and an electric vehicle provided by the present invention, the integrated channel apparatus includes a first component and a second component. The first component is provided with a channel group and a groove; the channel group includes multiple channels, the channel is used to accommodate a connecting tube, each channel runs through the first component along a thickness direction of the first component, and the groove is provided on one side of the first component for accommodating the connecting tube; the second component is provided with a strip groove group; the strip groove group includes multiple strip grooves, each strip groove is provided corresponding to two channels in the multiple channels and is used to connect the two channels, and the channels corresponding to each strip groove are different; a flank of the first component away from the groove is hermetically connected to a mating surface of the second component. During use, the integrated channel apparatus provided by the present disclosure is installed in the non-heat pump thermal management integrated module, the connecting tubes that need to be connected are placed in the two channels and the strip groove correspondingly connecting the two channels, the connecting tubes that do not need to be connected are placed in the grooves; when needing to be upgraded and retrofitted to a heat pump management system, the integrated channel apparatus is disassembled, a three-way valve or a four-way valve is adaptively installed on the exposed connecting tubes according to the user's requirement to form a nine-way valve required for the heat pump management system, and then other heat pump components are additionally installed; by adjusting the nine-way valve adaptively, different connection modes between various connecting tubes can be achieved, thereby achieving the corresponding mode requirements of the heat pump management system. The integrated channel apparatus provided in the present disclosure can quickly upgrade the electric vehicle from the non-heat pump system to the heat pump system without significantly increasing the cost and weight of the entire vehicle. As including the above integrated channel device mentioned, an electric vehicle provided by the present disclosure also has the above technical effect.

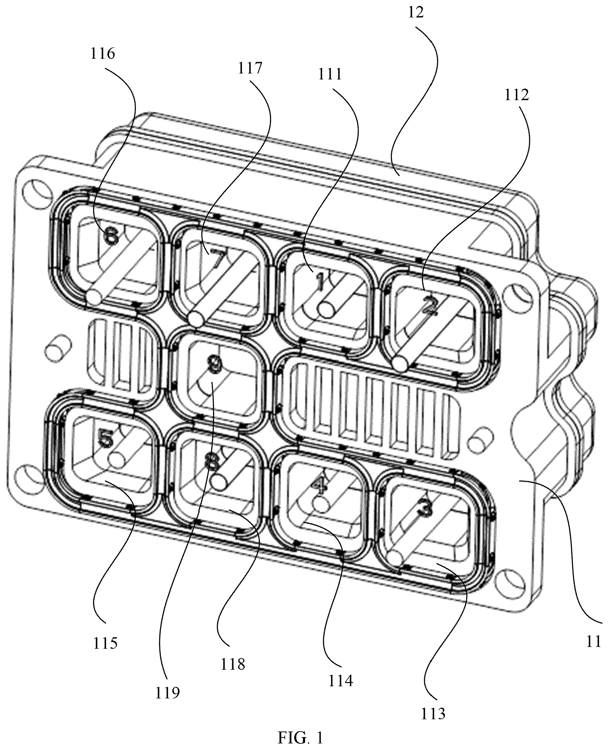

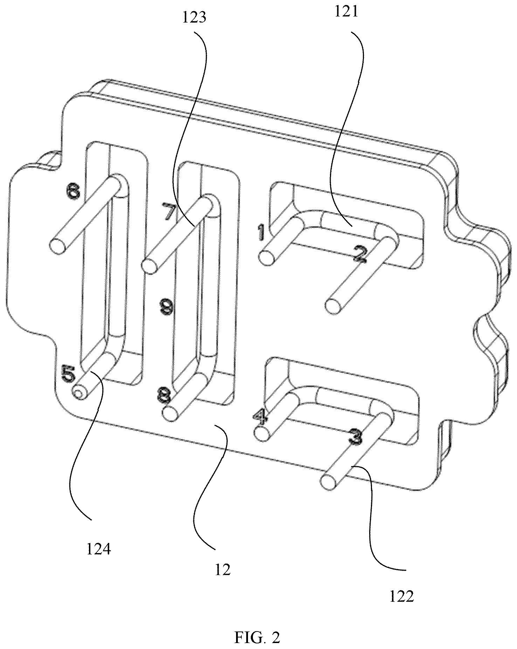

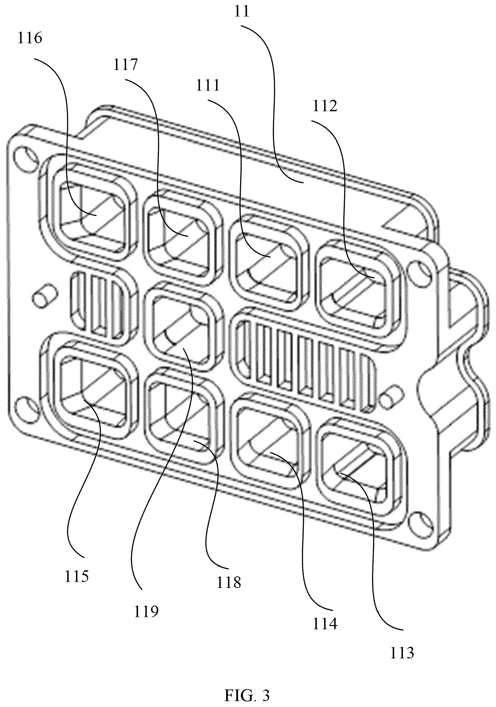

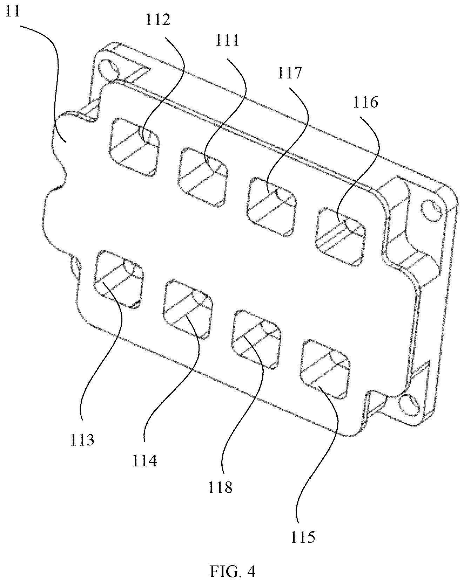

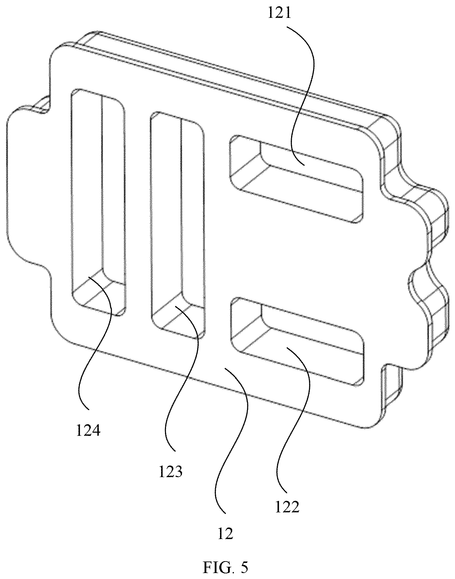

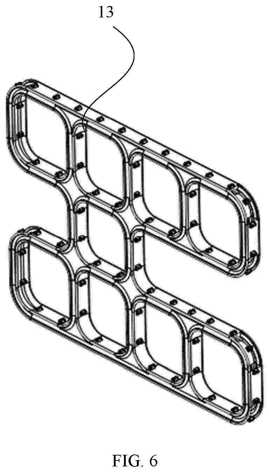

Referring to FIGs. 1 to 6, the integrated channel apparatus for a non-heat pump thermal management integrated module provided by an embodiment of the present application includes a first component 11 and a second component 12. the first component 11 is provided with a channel group and a groove 119; the channel group includes multiple channels, the channel is used to accommodate a connecting tube, each channel runs through the first component 11 along a thickness direction of the first component 11, and the groove 119 is provided on one side of the first component 11 for accommodating the connecting tube. the second component 12 is provided with a strip groove group; the strip groove group include multiple strip grooves, each strip groove is provided corresponding to two channels in the multiple channels and is used to connect the two channels, and the channels corresponding to each strip groove are different; a flank of the first component 11 away from the groove 119 is hermetically connected to a mating surface of the second component 12.

The first component 11 provided by the present disclosure is provided with a channel group and a groove 119; the channel group includes multiple channels, the channel is used to accommodate a connecting tube, each channel runs through the first component 11 along a thickness direction of the first component 11, and the groove 119 is provided on one side of the first component 11 for accommodating the connecting tube. Exemplarily, the channel group includes a first channel 111, a second channel 112, a third channel 113, a fourth channel 114, a fifth channel 115, a sixth channel 116, a seventh channel 117, and an eighth channel 118; the strip groove group includes a first strip groove 121, a second strip groove 122, a third strip groove 123, and a fourth strip groove 124; the first strip groove 121 connects the first channel 111 and the second channel 112; the second strip groove 122 connects the fourth channel 114 and the third channel 113;the third strip groove 123 connects the seventh channel 117 and the eighth channel 118; the fourth strip groove 124 connects the sixth channel 116 and the fifth channel 115. It should be noted that the number of channels included in the channel group is not limited here, in other specific embodiments, the number of channels provided on the first component 11 can be set to other appropriate values according to the specific needs of the user. It should be noted that the number of strip grooves included in the strip groove group is not limited here, in other specific embodiments, the number of strip grooves provided on the second component 12 can be set to other appropriate values according to the specific needs of the user.

Exemplarily, the channel group on the first component 11 is arranged into a rectangular array, a row direction of the rectangular array is a first direction, and a column direction of the rectangular array is a second direction; the second channel 112, the first channel 111, the seventh channel 117, and the sixth channel 116 are located in a first row; the third channel 113, the fourth channel 114, the eighth channel 118, and the fifth channel 115 are located in a third row; the groove 119 is provided in a second row between the first row and the third row, and is placed between the seventh channel 117 and the eighth channel 118; the first strip groove 121 and the second strip groove 122 are parallel and spaced, the first strip groove 121 is provided corresponding to the first row, and the second strip groove 122 is provided corresponding to the third row; the third strip groove 123 and the fourth strip groove 124 are parallel, the third strip groove 123 spans the first row, the second row, and the third row, and the fourth strip groove 124 spans the first row, the second row, and the third row; the first strip groove 121 is vertically provided with the three strip grooves. It should be noted that the channel group on the first component 11 is arranged into a rectangular array, the eight channels are set to three rows, and the strip groove is connected with the two corresponding channels, by using this arrangement and combination manner, the channel group and the strip groove group are connected and docked in an effectively and orderly manner, and the structure is simple, the arrangement does not exist in the form of staggering, so that the connecting tubes do not interfere with each other and the setting of the connecting tubes is more neat and orderly, and avoiding to occupy too much space.

Exemplarily, the first component 11 and the second component 12 are both provided as plate like structures. It should be noted that both the first component 11 and the second component 12 are provided as plate like structures, so that there is a connection plane between the first component 11 and the second component 12, and it is also convenient to achieve a sealed connection. It can be understood that the specific structures of 11 and the second component 12 are not limited here, in other specific embodiments, the first component 11 and the second component 12 can also be provided as other structures with connecting planes according to user's requirements.

Exemplarily, the shape and size of the edge of the mating surfaces of the first component 11 and the second component 12 can be exactly the same. As the size and shape of the mating surfaces of the first component 11 and the second component 12 are the same, it is convenient to connect the mating surfaces of the first component 11 and the second component 12. The edges of the first component 11 and the second component 12 can be set as small as possible around the channel group, that is, the side walls of the first component 11 and the second component 12 can have a concave and convex structure to reduce space occupation and reduce the weight of the entire vehicle.

In an optional exemplary embodiment, the mating surfaces of the first component 11 and the second component 12 are hot plate welded. It should be noted that the hot plate welding adopts a draw-plate structure, and the heat of the heating plate machine is transferred to fusion surfaces of upper and lower plastic heating parts, so as to melt the surfaces, and then the heating plate machine is quickly withdrawn by using the electric heating method. After heating, the two pieces of upper and lower heating parts, the melting surfaces are fused, solidified, and merged into one. The hot plate welding is simple to operate and is convenient to use, and after fusion, it can achieve a watertight and airtight fusion effect, and effectively prevent the liquid in the connecting tube from overflowing out of the connection of the first component 11 and the second component 12, which thus ensures the stability of the connection between the first component 11 and the second component 12.

In an optional exemplary embodiment, the integrated channel apparatus provided by the present disclosure further includes a sealing ring 13, the sealing ring 13 is provided in edges of the channel and the groove away from the second component. It should be noted that providing the sealing ring 13 can effectively ensure the sealing of the connection between the external component and the first component 11 when the first component 11 is externally connected with a component, and can effectively prevent the liquid in the connecting tube from overflowing along the connecting surface. Exemplarily, the channel and the groove 119 are provided with raised edges perpendicular to the first component 11; and the sealing ring 13 is sleeved in the raised edges. It should be noted that the edge of the sealing ring 13 is provided as a sleeve structure, and is sleeved in the channel and the groove 119 with the raised edge perpendicular to the first component 11, which ensures that when the first component 11 is not connected to the external component, the sealing ring 13 can be installed on the raised edge first, effectively ensuring the connection stability of the sealing ring 13, at the same time, the raised edge is provided along the edge of the channel and the groove 119, which can make the design of the sealing ring 13 more compact, avoid waste caused by the excessive sealing ring 13, and save costs. Exemplarily, the sealing ring 13 provided in all the channels and the groove 119 is constructed into an integral structure. It should be noted that the sealing ring 13 provided in all the channels and the groove 119 is constructed into an integral structure, which facilitates the corresponding installation, while avoids the phenomenon of missing or falling off when using a single setting and single installation.

In an optional exemplary embodiment, the integrated channel apparatus provided by the present disclosure further includes multiple connecting tubes, each connecting tube includes two end parts and a connecting part located between the two end parts, the connecting part is accommodated in the strip groove, and the two end parts are respectively inserted in the two channels connected by the strip groove. It should be noted that multiple connecting tubes are provided to be placed in the strip grooves and the channels for use in the non-heat pump thermal management integrated module, which facilitates the direct exposure of the connecting tubes after removing the first component 11 and the second component 12 during retrofitting and upgrading, facilitates the installation of appropriate three-way valves or four-way valves on the connections, and facilitates the achievement of quick conversion. Exemplarily, the connecting tubes includes a first connecting tube 141, a second connecting tube 142, a third connecting tube 143, and a fourth connecting tube 144. Where the first connecting tube 141 passes through the first strip groove 121, the second connecting tube 142 passes through the second strip groove 122, the third connecting tube 143 passes through the third strip groove 123, and the fourth connecting tube 144 passes through the fourth strip groove 124.

An electric vehicle provided by the present disclosure includes a vehicle body, a thermal integration management module, and the above integrated channel apparatus for a non-heat pump thermal management integrated module, the thermal integration management module is installed on the vehicle body, and the integrated channel apparatus is installed on the thermal integration management module. As including the above integrated channel device mentioned, the electric vehicle provided by the present disclosure also has the above technical effect, which can facilitate the achievement of quick retrofitting and upgrading without increasing self weight and cost.

The electric vehicle provided by the present disclosure further includes an installation bracket, where the installation bracket is hermetically connected to one side of the first component 11 away from the second component 12, and the installation bracket has multiple installation positions, the multiple installation positions are correspondingly connected with the multiple channels and the groove 119 one by one. It should be noted that in the embodiment, the installation bracket is provided to be hermetically connected to the first component 11, which facilitates placing the pipeline connected to the connecting tube directly on the installation bracket, and directly achieves that the pipeline inside the installation bracket is connected to the connecting tube inside the channel during installation. At the same time, the pipelines that do not need to be connected to other pipelines can be placed in the groove 119. Exemplarily, the connection bracket has nine installation positions, the nine installation positions are correspondingly connected with eight channels and one groove one by one.

In order to further illustrate the conversion of the integrated channel apparatus provided by the present disclosure between the non-heat pump management integration module and the heat pump management integration module, the principle of the non-heat pump management system and the heat pump management system are explained as follows:

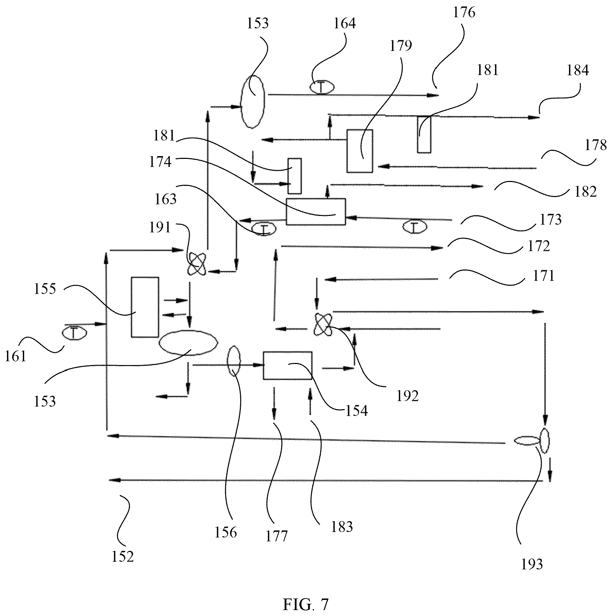

Specifically, as shown in FIG. 7, the heat pump system of the electric vehicle generally includes the following components: an expansion kettle, a motor water pump assembly, a battery water pump assembly, a heating water pump assembly, a heat exchanger, a water-cooled condenser, a water temperature sensor, a four-way solenoid valve, a three-way solenoid valve, a two-way solenoid valve, a two-way proportional valve, a three-way proportional valve, a cooling connection pipeline, an air conditioning liquid-air separator, an air conditioning EXV valve, an air conditioning SOV valve, an air conditioning connection pipeline, etc.

The principle diagram of the heat pump thermal management integration module includes a thermal engine cooling loop and a battery cooling loop; the flow direction of the thermal engine cooling loop is as follows: radiator outlet connection 151 → first four-way valve 191 → motor water pump 153 → water-cooled condenser 154 → second four-way valve 192 → return to radiator water inlet connection port 152.

It should be noted that a cooling water container 155 is provided between the radiator and the motor water pump 153; a two-way proportional valve 156 is provided between the motor water pump 153 and the water-cooled condenser 154; a first water temperature sensor 161 is provided at the water outlet of the radiator.

The flow direction of the battery cooling loop is as follows: battery pack water outlet connection port 171 → second four-way valve 192 → heating element water inlet connection port 172 → heating element water outlet connection port 173 → heat exchanger 174 → first four-way valve 191 → motor water pump 153 → battery pack water inlet connection port 176; where a second water temperature sensor 162 and a third water temperature sensor 163 are respectively provided before and after the heat exchanger 174, and a fourth water temperature sensor 164 is provided before the battery pack water inlet connection port 176.

In the above thermal engine cooling loop and battery cooling loop, there is also a flow cycle between the water-cooled condenser 154 and the heat exchanger 174, which is as follows: water-cooled condenser 154 → built-in cooling condenser inlet connection port 177 → built-in cooling condenser outlet connection port 178 → drying bottle 179 → electronic expansion valve 181 → heat exchanger 174 → compressor inlet connection port 182 → compressor outlet connection port 183 → water-cooled condenser 154.

It should also be noted that a branch is also provided between the drying bottle 179 and the electronic expansion valve 181, the branch is connected with a build-in evaporator inlet connection port 184, an electronic expansion valve 181 is also provided before the build-in evaporator inlet connection port 184.

It should also be noted that a three-way valve 193 is also provided between the second four-way valve 192 and the returning radiator water inlet connection port 152, and another interface of the three-way valve 193 is connected to the first four-way valve 191.

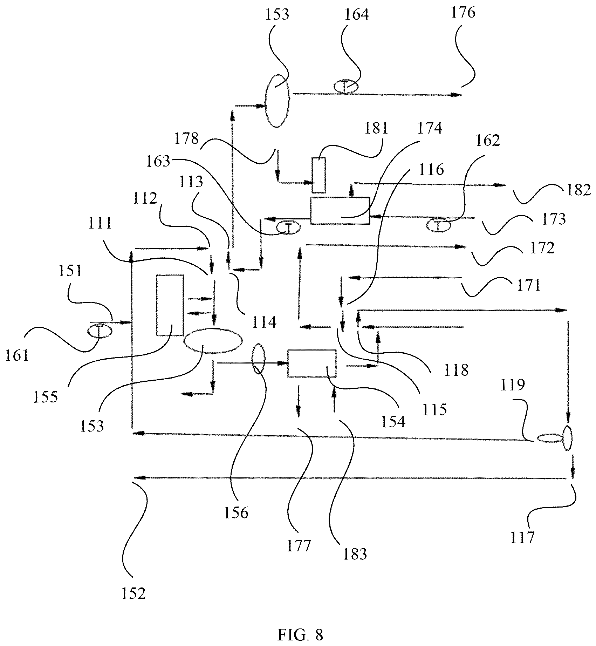

As shown in FIG. 8, the principle diagram of the non-heat pump system eliminates the first four-way valve 191, the second four-way valve 192, the three-way valve 193, the build-in evaporator inlet connection port 184, the electronic expansion valve 181 provided before the build-in evaporator inlet connection port 184, and the drying bottle 179 on the basic of the heat pump system.

The non-heat pump thermal management integrated module includes a thermal engine cooling loop and a battery cooling loop; the flow direction of the thermal engine cooling loop is as follows: radiator water outlet connection port 151 → second channel 112- first channel 111 → motor water pump 153 → water-cooled condenser 154 → eighth channel 118- seventh channel 117 → return to radiator water inlet connection port 152.

It should be noted that a cooling water container 155 is provided between the radiator and the motor water pump 153; a two-way proportional valve 156 is provided between the motor water pump 153 and the water-cooled condenser 154; a first water temperature sensor 161 is provided at the water outlet of the radiator.

The flow direction of the battery cooling loop is as follows: battery pack water outlet connection port 171 → sixth channel 116 → fifth channel 115 → heating element water inlet connection port 172 → heating element water outlet connection port 173 → heat exchanger 174 → fourth channel 114 → third channel 113 → motor water pump 153 → battery pack water inlet connection port 176; where a second water temperature sensor 162 and a third water temperature sensor 163 are respectively provided before and after the heat exchanger 174, and a fourth water temperature sensor 164 is provided before the battery pack water inlet connection port 176.

In the above thermal engine cooling loop and battery cooling loop, there is also a flow cycle between the water-cooled condenser 154 and the heat exchanger 174, which is as follows: water-cooled condenser 154 → built-in cooling condenser inlet connection port 177 → built-in cooling condenser outlet connection port 178 → electronic expansion valve 181 → heat exchanger 174 → compressor inlet connection port 182 → compressor outlet connection port 183 → water-cooled condenser 154.

It should also be noted that a groove 119 is provided between the seventh channel 117 and the eighth channel 118, and the groove 119 does not affect the connection between the seventh channel 117 and the eighth channel 118.

When it is needed to upgrade and retrofit the non-heat pump thermal management integrated module to the heat pump thermal management integration module, the first component 11 and the second component 12 of the present disclosure are directly disassembled, and a corresponding valve is installed on the exposed connecting tubes, such as the first four-way valve 191 is installed at the exposed connecting tube of the first channel 111, the second channel 112, the third channel 113, and the fourth channel 114, and the second four-way valve 192 is installed at the exposed connecting tube of the fifth channel 115, the sixth channel 116 and the eighth channel 118, and the three-way valve 193 is installed at the exposed connecting tube of the seventh channel 117 and the groove 119, which can quickly upgrade the non-heat pump thermal management integrated module to the heat pump thermal management integration module.

Finally, it should be noted that the above embodiments are only used to illustrate the technical solutions of the present invention, but not to limit them; although the present invention has been described in detail with reference to the foregoing embodiments, person with ordinary skill in the art should understand that: it is still possible to make modifications to the technical solutions described in the foregoing embodiments or to make equivalent replacements for some or all of the technical features therein; and these modifications or replacements do not take the essence of the corresponding technical solutions out of the scope of the technical solutions of the embodiments of the present invention.

Furthermore, it should be noted that the various specific technical features described in the above specific embodiments can be combined in any suitable manner without contradiction. In order to avoid unnecessary repetition, the present invention does not separately explain various possible combinations.

## Claims

1. An integrated channel apparatus for a non-heat pump thermal management integrated module, comprising a first component (11) and a second component (12);
the first component (11) is provided with a channel group and a groove (119);
the channel group comprises multiple channels, the channel is used to accommodate a connecting tube, each channel runs through the first component (11) along a thickness direction of the first component (11), and the groove (119) is provided on one side of the first component (11) for accommodating the connecting tube;
the second component (12) is provided with a strip groove group; the strip groove group comprises multiple strip grooves, each strip groove is provided corresponding to two channels in the multiple channels and is used to connect the two channels, and the channels corresponding to each strip groove are different;
a flank of the first component (11) away from the groove (119) is hermetically connected to a mating surface of the second component (12).

2. The integrated channel apparatus according to claim 1, wherein the channel group comprises a first channel (111), a second channel (112), a third channel (113), a fourth channel (114), a fifth channel (115), a sixth channel (116), a seventh channel (117), and an eighth channel (118);
the strip groove group comprises a first strip groove (121), a second strip groove (122), a third strip groove (123), and a fourth strip groove (124);
the first strip groove (121) connects the first channel (111) and the second channel (112);
the second strip groove (122) connects the fourth channel (114) and the third channel (113);
the third strip groove (123) connects the seventh channel (117) and the eighth channel (118);
the fourth strip groove (124) connects the sixth channel (116) and the fifth channel (115).

3. The integrated channel apparatus according to claim 2, wherein the channel group on the first component (11) is arranged into a rectangular array, a row direction of the rectangular array is a first direction, and a column direction of the rectangular array is a second direction;
the second channel (112), the first channel (111), the seventh channel (117), and the sixth channel (116) are located in a first row; the third channel (113), the fourth channel (114), the eighth channel (118), and the fifth channel (115) are located in a third row;
the groove (119) is provided in a second row between the first row and the third row, and is placed between the seventh channel (117) and the eighth channel (118);
the first strip groove (121) and the second strip groove (122) are parallel and spaced, the first strip groove (121) is provided corresponding to the first row, and the second strip groove (122) is provided corresponding to the third row;
the third strip groove (123) and the fourth strip groove (124) are parallel, the third strip groove (123) spans the first row, the second row, and the third row, and the fourth strip groove (124) spans the first row, the second row, and the third row; the first strip groove (121) is vertically provided with the third strip groove (123).

4. The integrated channel apparatus according to claim 1, wherein mating surfaces of the first component (11) and the second component (12) are hot plate welded.

5. The integrated channel apparatus according to any one of claims 1 to 4, further comprising a sealing ring (13), the sealing ring (13) is provided in edges of the channel and the groove (119) away from the second component (12).

6. The integrated channel apparatus according to claim 5, wherein the channel and the groove (119) are provided with raised edges perpendicular to the first component (11); and the sealing ring (13) is sleeved in the raised edges.

7. The integrated channel apparatus according to claim 5, wherein the sealing ring (13) provided in all the channels and the groove (119) is constructed into an integral structure.

8. The integrated channel apparatus according to any one of claims 1 to 4, further comprising multiple connecting tubes (141, 142, 143, 144), each connecting tube comprises two end parts and a connecting part located between the two end parts, the connecting part is accommodated in the strip groove, and the two end parts are respectively inserted in the two channels connected by the strip groove.

9. The integrated channel apparatus according to any one of claims 1 to 4, wherein the first component (11) and the second component (12) are provided as plate like structures.

10. An electric vehicle, comprising a vehicle body, a thermal management integration module, and the integrated channel apparatus for a non-heat pump thermal management integrated module according to any one of claims 1 to 9, the thermal management integration module is installed on the vehicle body, and the integrated channel apparatus is installed on the thermal management integration module.

11. The electric vehicle according to claim 10, further comprising an installation bracket, wherein the installation bracket is hermetically connected to one side of the first component (11) away from the second component (12), and the installation bracket has multiple installation positions, the multiple installation positions are correspondingly connected with the multiple channels and the groove (119) one by one.

## Patentansprüche

1. Integrierte Kanalvorrichtung für ein integriertes Modul mit Wärmepumpenwärmeverwaltung, umfassend eine erste Komponente (11) und eine zweite Komponente (12);
wobei die erste Komponente (11) mit einer Kanalgruppe und einer Nut (119) versehen ist;
wobei die Kanalgruppe mehrere Kanäle umfasst, der Kanal verwendet wird, um ein Verbindungsohr aufzunehmen, jeder Kanal durch die erste Komponente (11) entlang einer Dickenrichtung der ersten Komponente (11) verläuft und die Nut (119) auf einer Seite der ersten Komponente (11) zum Aufnehmen des Verbindungsrohrs bereitgestellt ist;
wobei die zweite Komponente (12) mit einer Streifennutgruppe versehen ist; die Streifennutgruppe mehrere Streifennuten umfasst, jede Streifennut entsprechend zwei Kanälen in den mehreren Kanälen bereitgestellt ist und verwendet wird, um die zwei Kanäle zu verbinden, und die Kanäle, die jeder Streifennut entsprechen, unterschiedlich sind;
wobei eine Flanke der ersten Komponente (11) von der Nut (119) entfernt hermetisch mit einer passenden Oberfläche der zweiten Komponente (12) verbunden ist.

2. Integrierte Kanalvorrichtung nach Anspruch 1, wobei die Kanalgruppe einen ersten Kanal (111), einen zweiten Kanal (112), einen dritten Kanal (113), einen vierten Kanal (114), einen fünften Kanal (115), einen sechsten Kanal (116), einen siebten Kanal (117) und einen achten Kanal (118) umfasst;
wobei die Streifennutgruppe eine erste Streifennut (121), eine zweite Streifennut (122), eine dritte Streifennut (123) und eine vierte Streifennut (124) umfasst;
wobei die erste Streifennut (121) den ersten Kanal (111) und den zweiten Kanal (112) verbindet;
wobei die zweite Streifennut (122) den vierten Kanal (114) und den dritten Kanal (113) verbindet;
wobei die dritte Streifennut (123) den siebten Kanal (117) und den achten Kanal (118) verbindet;
wobei die vierte Streifennut (124) den sechsten Kanal (116) und den fünften Kanal (115) verbindet.

3. Integrierte Kanalvorrichtung nach Anspruch 2, wobei die Kanalgruppe auf der ersten Komponente (11) in einer rechtwinkligen Anordnung angeordnet ist, eine Reihenrichtung der rechtwinkligen Anordnung eine erste Richtung ist und eine Spaltenrichtung der rechtwinkligen Anordnung eine zweite Richtung ist;
sich der zweite Kanal (112), der erste Kanal (111), der siebte Kanal (117) und der sechste Kanal (116) in einer ersten Reihe befinden; sich der dritte Kanal (113), der vierte Kanal (114), der achte Kanal (118) und der fünfte Kanal (115) in einer dritten Reihe befinden;
wobei die Nut (119) in einer zweiten Reihe zwischen der ersten Reihe und der dritten Reihe bereitgestellt ist und sich zwischen dem siebten Kanal (117) und dem achten Kanal (118) befindet;
wobei die erste Streifennut (121) und die zweite Streifennut (122) parallel und beabstandet sind, die erste Streifennut (121) entsprechend der ersten Reihe bereitgestellt ist und die zweite Streifennut (122) entsprechend der dritten Reihe bereitgestellt ist;
wobei die dritte Streifennut (123) und die vierte Streifennut (124) parallel sind, die dritte Streifennut (123) die erste Reihe, die zweite Reihe und die dritte Reihe überspannt und die vierte Streifennut (124) die erste Reihe, die zweite Reihe und die dritte Reihe überspannt; wobei die erste Streifennut (121) vertikal zu der dritten Streifennut (123) bereitgestellt ist.

4. Integrierte Kanalvorrichtung nach Anspruch 1, wobei zusammenpassende Oberflächen der ersten Komponente (11) und der zweiten Komponente (12) durch Spiegelschweißen miteinander verschweißt sind.

5. Integrierte Kanalvorrichtung nach einem der Ansprüche 1 bis 4, ferner umfassend einen Dichtring (13), wobei der Dichtring (13) in Rändern des Kanals und der Nut (119) von der zweiten Komponente (12) entfernt bereitgestellt ist.

6. Integrierte Kanalvorrichtung nach Anspruch 5, wobei der Kanal und die Nut (119) mit erhöhten Rändern senkrecht zu der ersten Komponente (11) versehen sind; und der Dichtring (13) in den erhöhten Rändern ummantelt ist.

7. Integrierte Kanalvorrichtung nach Anspruch 5, wobei der Dichtring (13) in allen Kanälen bereitgestellt ist und die Nut (119) in eine einstückige Struktur integriert ist.

8. Integrierte Kanalvorrichtung nach einem der Ansprüche 1 bis 4, ferner umfassend mehrere Verbindungsrohre (141, 142, 143, 144), wobei jedes Verbindungsrohr zwei Endteile und ein Verbindungsteil, das sich zwischen den zwei Endteilen befindet, umfasst, das Verbindungsteil in der Streifennut aufgenommen ist und die zwei Endteile jeweils in die zwei Kanäle, die durch die Streifennut verbunden sind, eingeführt sind.

9. Integrierte Kanalvorrichtung nach einem der Ansprüche 1 bis 4, wobei die erste Komponente (11) und die zweite Komponente (12) als plattenähnliche Strukturen bereitgestellt sind.

10. Elektrofahrzug, umfassend eine Fahrzeugkarosserie, ein Wärmeverwaltungsintegrationsmodul und die integrierte Kanalvorrichtung für ein integriertes Modul mit Wärmepumpenwärmeverwaltung nach einem der Ansprüche 1 bis 9, wobei das Wärmeverwaltungsintegrationsmodul an der Fahrzeugkarosserie installiert ist und die integrierte Kanalvorrichtung an dem Wärmeverwaltungsintegrationsmodul installiert ist.

11. Elektrofahrzeug nach Anspruch 10, ferner umfassend eine Montagehalterung, wobei die Montagehalterung hermetisch mit einer Seite der ersten Komponente (11) von der zweiten Komponente (12) entfernt verbunden ist und die Montagehalterung mehrere Installationspositionen aufweist, wobei die mehreren Installationspositionen entsprechend mit den mehreren Kanälen und der Nut (119) einzeln verbunden sind.

## Revendications

1. Appareil à canaux intégrés pour module intégré de gestion de chaleur de pompe autre qu'une pompe à chaleur, comprenant un premier composant (11) et un deuxième composant (12) ;
le premier composant (11) est pourvu d'un groupe de canaux et d'une rainure (119) ;
le groupe de canaux comprend multiples canaux, le canal est utilisé pour loger un tube de connexion, chaque canal traverse le premier composant (11) le long d'une direction d'épaisseur du premier composant (11), et la rainure (119) est prévue sur un côté du premier composant (11) pour loger le tube de connexion ;
le deuxième composant (12) est pourvu d'un groupe de rainures de bande ; le groupe de rainures de bande comprend plusieurs rainures de bande, chaque rainure de bande est prévue en correspondance avec deux canaux dans les multiples canaux et est utilisée pour connecter les deux canaux, et les canaux correspondant à chaque rainure de bande sont différents ;
un flanc du premier composant (11) éloigné de la rainure (119) est relié hermétiquement à une surface d'accouplement du deuxième composant (12).

2. Appareil à canaux intégrés selon la revendication 1, dans lequel le groupe de canaux comprend un premier canal (111), un deuxième canal (112), un troisième canal (113), un quatrième canal (114), un cinquième canal (115), un sixième canal (116), un septième canal (117) et un huitième canal (118) ;
le groupe de rainures de bande comprend une première rainure de bande (121), une deuxième rainure de bande (122), une troisième rainure de bande (123) et une quatrième rainure de bande (124) ;
la première rainure de bande (121) relie le premier canal (111) et le deuxième canal (112) ;
la deuxième rainure de bande (122) relie le quatrième canal (114) et le troisième canal (113) ;
la troisième rainure de bande (123) relie le septième canal (117) et le huitième canal (118) ;
la quatrième rainure de bande (124) relie le sixième canal (116) et le cinquième canal (115).

3. Appareil à canaux intégrés selon la revendication 2, dans lequel le groupe de canaux sur le premier composant (11) est agencé en un réseau rectangulaire, une direction de rangée du réseau rectangulaire est une première direction, et une direction de colonne du réseau rectangulaire est une deuxième direction ;
le deuxième canal (112), le premier canal (111), le septième canal (117) et le sixième canal (116) sont situés dans une première rangée ; le troisième canal (113), le quatrième canal (114), le huitième canal (118) et le cinquième canal (115) sont situés dans une troisième rangée ;
la rainure (119) est prévue dans une deuxième rangée entre la première rangée et la troisième rangée, et est placée entre le septième canal (117) et le huitième canal (118) ;
la première rainure de bande (121) et la deuxième rainure de bande (122) sont parallèles et espacées, la première rainure de bande (121) est prévue en correspondance avec la première rangée, et la deuxième rainure de bande (122) est prévue en correspondance avec la troisième rangée ;
la troisième rainure de bande (123) et la quatrième rainure de bande (124) sont parallèles, la troisième rainure de bande (123) s'étend sur la première rangée, la deuxième rangée et la troisième rangée, et la quatrième rainure de bande (124) s'étend sur la première rangée, la deuxième rangée et la troisième rangée ; la première rainure de bande (121) est pourvue verticalement de la troisième rainure de bande (123).

4. Appareil à canaux intégrés selon la revendication 1, dans lequel les surfaces d'accouplement du premier composant (11) et du deuxième composant (12) sont soudées par plaque à chaud.

5. Appareil à canaux intégrés selon l'une quelconque des revendications 1 à 4, comprenant en outre une bague d'étanchéité (13), la bague d'étanchéité (13) étant disposée dans des bords du canal et de la rainure (119) à l'écart du deuxième composant (12).

6. Appareil à canaux intégrés selon la revendication 5, dans lequel le canal et la rainure (119) sont pourvus de bords surélevés perpendiculaires au premier composant (11) ; et la bague d'étanchéité (13) est emmanchée dans les bords surélevés.

7. Appareil à canaux intégrés selon la revendication 5, dans lequel la bague d'étanchéité (13) prévue dans tous les canaux et la rainure (119) sont construites en une structure intégrée.

8. Appareil à canaux intégrés selon l'une quelconque des revendications 1 à 4, comprenant en outre de multiples tubes de connexion (141, 142, 143, 144), chaque tube de connexion comprenant deux parties d'extrémité et une partie de connexion située entre les deux parties d'extrémité, la partie de connexion est logée dans la rainure de bande, et les deux parties d'extrémité sont respectivement insérées dans les deux canaux reliés par la rainure de bande.

9. Appareil à canaux intégrés selon l'une quelconque des revendications 1 à 4, dans lequel le premier composant (11) et le deuxième composant (12) sont prévus sous forme de structures en forme de plaque.

10. Véhicule électrique, comprenant une carrosserie de véhicule, un module d'intégration de gestion thermique et l'appareil à canaux intégrés pour un module intégré de gestion de chaleur de pompe autre qu'une pompe à chaleur selon l'une quelconque des revendications 1 à 9, le module intégration de gestion thermique est installé sur la carrosserie du véhicule et l'appareil de canal intégré est installé sur le module d'intégration de gestion thermique.

11. Véhicule électrique selon la revendication 10, comprenant en outre un support d'installation, le support d'installation étant hermétiquement connecté à un côté du premier composant (11) éloigné du deuxième composant (12), et le support d'installation ayant multiples positions d'installation, les multiples positions d'installation étant connectées de manière correspondante aux multiples canaux et à la rainure (119) un par un.
